Europäisches Patentamt

European Patent Office

Office européen des brevets

(19)

(11) Publication number: 0 225 749
A1

## (12) EUROPEAN PATENT APPLICATION

(21) Application number: 86308976.9

(51) Int. Cl.⁴: F16D 65/56

(22) Date of filing: 18.11.86

(30) Priority: 13.12.85 GB 8530817
12.07.86 GB 8617034
12.07.86 GB 8617035

(43) Date of publication of application:
16.06.87 Bulletin 87/25

(84) Designated Contracting States:
DE ES FR GB IT

(71) Applicant: AUTOMOTIVE PRODUCTS PUBLIC LIMITED COMPANY
Tachbrook Road
Leamington Spa Warwickshire CV31 3ER(GB)

(72) Inventor: Haines, William Ernest
39 St.Mary's Close
Southam Warwicks.CV33 0EW(GB)
Inventor: Saunders, Denis Bryan
30 Chichester Lane
Hampton Magna Warwicks(GB)

(74) Representative: Cundy, Anthony Brian et al
Anthony Cundy & Company 384 Station Road Dorridge
Solihull West Midlands B93 8ES(GB)

(54) Automatic adjuster for drum brake.

(57) An automatic adjuster for an internal shoe drum brake comprises a spacer element (22) having: a wedge shaped portion (23) which forms a link between the rigid strut (19) of a hand brake mechanism and an abutment (34) on one brake shoe (11); and a screw threaded portion (26) which engages a correspondingly threaded portion of a ratchet wheel - (29). The ratchet wheel (29) is mounted between the posts of the trunnion (27) which is pivotally mounted with respect to the shoe (11). A pawl assembly (30, 36) is mounted for movement with respect to the shoe (11) and has means (35) for engagement of the spacer element (22). Spring means (39) maintains engagement between the pawl assembly (30, 36) and spacer element (22) and between the spacer element (22) and strut (19). A pawl formation (39) engages the ratchet wheel (39), so that upon pivoting of the spacer element (22) the pawl formation - (38) will rotate the ratchet wheel (29) to advance the wedge shaped portion (23) between the strut (19) and abutment (34).

FIG.2

## AUTOMATIC ADJUSTER FOR DRUM BRAKE

The present invention relates to an automatic adjuster for a drum brake, suitable for motor vehicles.

A drum brake normally includes a fixed back plate, a pair of arcuate brake shoes mounted on the back plate, expanding means for urging the brake shoes apart generally radially of the back plate and a rotating brake drum, coaxial with the back plate, against which the brake shoes act.

Such a brake may have independent service brake and parking brake expanding means. By service brake, we mean the primary vehicle braking system, usually hydraulically actuable, and by parking brake, the secondary vehicle braking system, usually mechanically actuable.

Wear adjusters normally incorporated in a drum brake to maintain a substantially fixed clearance between the brake shoes and the brake drum, to compensate for wear of the brake shoe linings. Such adjusters are desirable as they maintain the working travel of the expanding means within the range of a vehicle brake actuating system. Automatic operation of wear adjusters, as the brake is actuated, is known.

This invention is particularly concerned with wear adjusters for drum brakes having a strut between the hand brake lever pivoted on one shoe, and the other shoe. Prior art adjuster mechanisms for such brakes have included screw threaded members in the strut, the members being relatively rotatable on operation of the brake to lengthen the strut and so compensate for wear of the brake shoe linings. One problem with such adjuster mechanisms is that they increase the space required for the strut in a critical area between the brake actuating cylinder and the rotatable wheel hub. This arrangement further requires that the screw threads of the members transmit brake actuating loads on operation of the hand brake.

The present invention offers an adjuster mechanism which does not substantially encroach on the space between the brake actuating cylinder and the wheel hub and which includes relatively rotatable members which are substantially free from transmission of brake actuating loads.

According to one aspect of the present invention, an automatic adjuster for an internal shoe drum brake including a hand brake lever pivotted to one brake shoe and a rigid strut extending between the hand brake lever and the other brake shoe comprises; a spacer element having a wedge portion with a pair of divergent edges and a screw threaded portion extending parallel to the wedge portion, said screw threaded portion engaging a correspondingly threaded portion on a ratchet wheel; characterised in that the ratchet wheel is located in a trunnion which is pivotally attached to said other brake shoe, the spacer element thereby being mounted on said other brake shoe in a position in which the wedge portion is interposed between the end of the rigid strut and an abutment on said other brake shoe and one of the divergent edges may bear against the end of the rigid strut while the other divergent edge bears against the abutment; a pawl assembly mounted on said other brake shoe for movement relative thereto, said pawl assembly comprising a formation which engages the spacer element and a resilient member for co-operation with the ratchet wheel, means to maintain the divergent edge of the spacer element in engagement with the end of the rigid strut and means to maintain engagement between the pawl assembly and the spacer element, so that when there is relative movement between the rigid strut and said other brake shoe the resilient member will move relative to the ratchet wheel and will rotate the ratchet wheel to advance the spacer element and increase the width of the wedge portion thereof which is interposed between the end of the rigid strut and the abutment on said other brake shoe, when the relative movement between the rigid strut and said other brake shoe exceeds a predetermined maximum limit.

An embodiment of the invention is now described, by way of example only, with reference to the accompanying drawings in which:-

Figure 1 is a view of a drum brake assembly to which the invention is applicable;

Figure 2 is an exploded view of an automatic adjuster mechanism in accordance with the invention;

Figure 3 is an exploded view of a modified version of the automatic adjuster mechanism illustrated in figure 2;

Figure 4 is a part sectional elevation of the trunnion assembly of the adjuster mechanism illustrated in figure 3; and

Figure 5 is a plan view of the retaining means used in the adjust mechanism illustrated in figure 3.

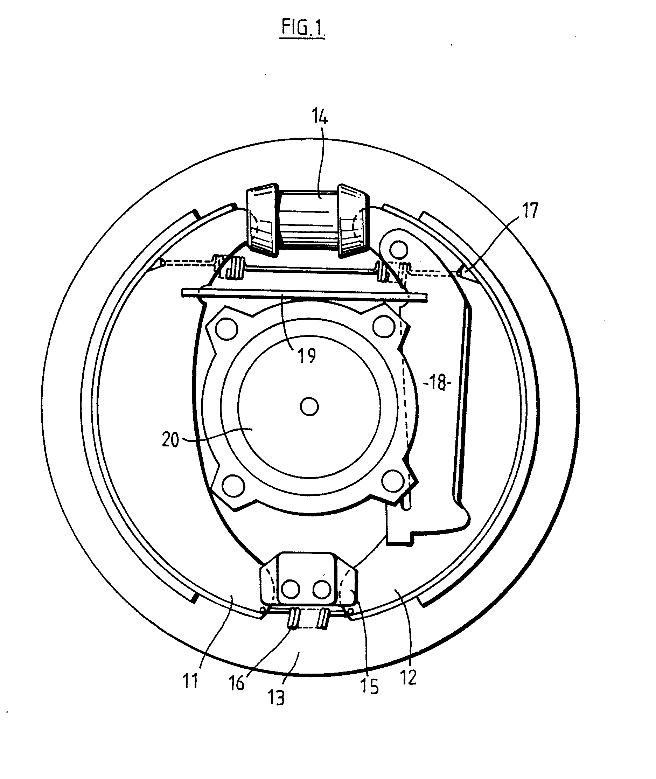

With reference to figure 1 there is shown a drum brake assembly having a pair of brake shoes 11 and 12 mounted on a back plate 13. The brake shoes 11 and 12 may be urged apart by a service brake expander in the form of a double acting hydraulic cylinder 14, about a fixed abutment 15. Pull-off springs 16 and 17 are provided to return the brake shoes to their inoperative position. A hand brake lever 18 is pivotted to the brake shoe 12 and acts on shoe 11 through a rigid cross strut 19, movement of the lever clockwise (as viewed in Figure 1) about its pivot urging the shoes 11 and 12 apart to apply the hand brake. A rotatable hub 20 carries a brake drum (not shown) which is co-axial with the backing plate 13.

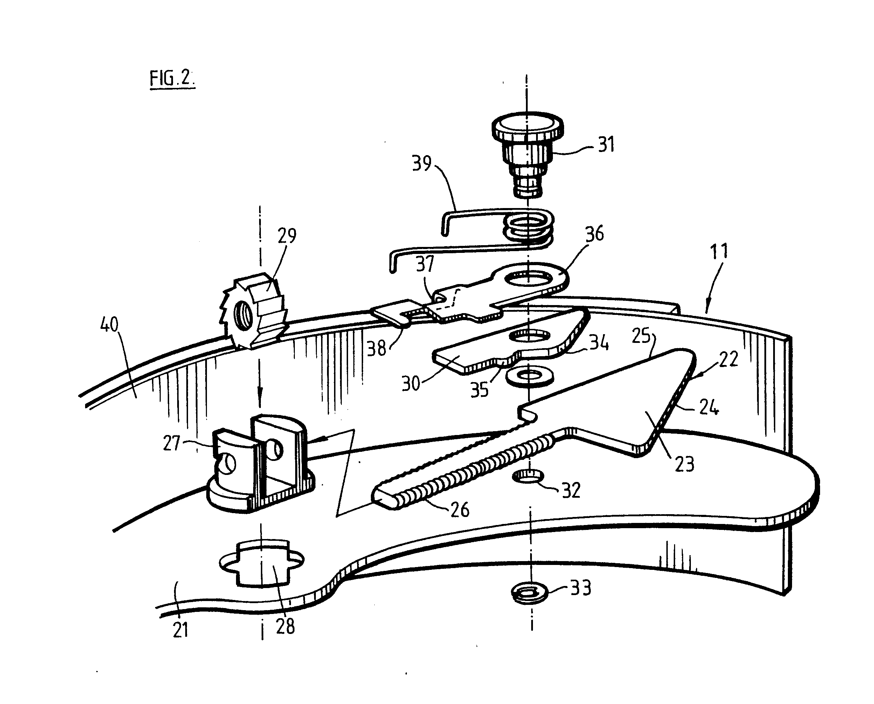

The automatic adjuster illustrated in figure 2 is mounted on the web portion 21 of brake shoe 11. The adjuster comprises a spacer element 22 formed from a flat plate having a wedge portion 23 with divergent edges 24 and 25 and a screw threaded portion 26 which is generally rectangular in cross section with screw thread formations along at its narrower side edges. A trunion 27 is mounted in a keyhole aperture 28 in the web portion 21, so that it is free to rotate relative to the brake shoe 11. A threaded ratchet wheel 29 is located on the trunion 27 and engages the threaded portion 26 of spacer element 22.

plate 30 is pivotally attached to the web portion 21 of shoe 11 by a shouldered pivot post 31, which is retained in hole 32 in the web portion 21 by a circlip 33. The portion of the plate 30 surrounding the pivot post 31 defines an abutment 34 against which edge 25 of the wedge portion 34 may bear. A formation 35 is also provided on plate 30 at a position spaced from the pivot post 31, this formation 35 being arranged to engage edge 25 of the wedge portion 23.

An actuating arm 36 is also pivotted on pivot post 31, so it overlies plate 30. This actuating arm 36 has a flange formation 37 which engages plate 30 on the side thereof remote from formation 35, and a pawl formation 38 which overlies and engages the ratchet wheel 29. The actuating arm 36 is resiliently urged by a torsion spring 39 mounted on the upper end of pivot post 31 and acting between the actuating arm 36 and the inside of brake shoe table 40, to force the flange portion 37 of the actuating arm 36 into engagement with plate 30 and the formation 35 on plate 30 into engagement with edge 25 of the wedge portion 23. The torsion spring 39 also acts between the head of pivot post 31 and the actuation arm 36, to resiliently load the actuating arm 36 down onto plate 30.

When mounted via the trunion 27 on the web portion 21 of brake shoe 11, the spacer element 22 lies against the web portion 21. The rigid strut 19 of the hand brake mechanism engages edge 24 of the wedge portion 23. When the brake is in the non-operative condition the rigid strut 19, acting through the wedge portion 23, the abutment 34 on plate 30 which is engaged by edge 25 of the wedge portion 23, and pivot post 31, opposes the load drawing the brake shoes 11 and 12 together, that is applied by pull-off spring 17.

For hand brake operation, the load applied to the rigid strut 19 by movement of the lever 20 in the clockwise direction, is transmitted to brake shoe 11 via the spacer element 22, abutment 34 on the plate 30 and pivot post 31, so that brake shoes 11 and 12 will be forced apart and the friction linings thereon will be forced into engagement with the brake drum.

When the hand brake is released and the service brake is applied by means of hydraulic cylinder 14, relative movement will occur between the end of rigid strut 19 and brake shoe 11. During this relative movement, the load applied by torsion spring 39, via actuating arm 36, the flange formation 37, plate 30 and formation 35 on edge 25 of wedge portion 23, will cause the spacer element 22 to rotate about the pivotted trunnion 27, thereby maintaining edge 24 of the wedge shaped portion 23 in engagement with the end of rigid strut 19. Movement of the spacer element 22 in this manner will produce a clearance between edge 25 of the wedge shaped portion 23 thereof, and the abutment 34.

Pivotting of the spacer arm 22 will also allow the actuating lever 36 and plate 30 to pivot and pawl 38 will move relative to the ratchet wheel 29. If movement of the pawl 38 is sufficient to bring it into engagement with a radial face of one of the teeth of the ratchet wheel 29, it will rotate ratchet wheel 29 and interaction of the screw thread thereof with the screw threaded portion 26 of the spacer element 22 will cause the spacer element 22 to advance between the end of strut 19 and the abutment 34, so that the effective width of wedge portion 23 positioned therebetween will be increased.

Upon release of the service brake, the spacer element 22 will pivot back against the action of spring 39 until edge 25 again engages abutment 34. The effective length of the rigid strut 19 between the brake shoe 11 and the hand brake lever 20 is thereby effectively increased, thus increasing the distance between brake shoes 11 and 12 and compensating for any increase in the gap between the frictional linings on the brake shoes 11 and 12 and the brake drum, due to wear of the friction linings.

Release of the service brake, will also cause the actuating arm 36 to rotate against the spring 39 and the pawl 38 will ride up the inclined surface of the next tooth on the ratchet wheel 29. Friction between the screw threads of the ratchet wheel 29 and screw threaded portion 26 of spacer element 22, and the resilience of the actuating arm 36, will permit this to happen, without rotation of the ratchet wheel 29. If the clearance between the friction linings and the brake drum is sufficient, the return movement of the pawl 38 will be sufficient to pick up the next tooth on the ratchet wheel 39. The length of the actuating arm 36, pitch of the teeth of the ratchet wheel 29, pitch of the threads on the ratchet wheel 29 and portion 26 of spacer element 22 and the divergence of the edges 24 and 25 of the spacer element 22 are selected, such that the incremental adjustment produced by movement of the ratchet wheel 29 by one tooth, will maintain the gap between the friction linings and the brake drum within desired tolerances, which lie between the minimum running clearance required and the maximum travel permitted by the hand brake mechanism.

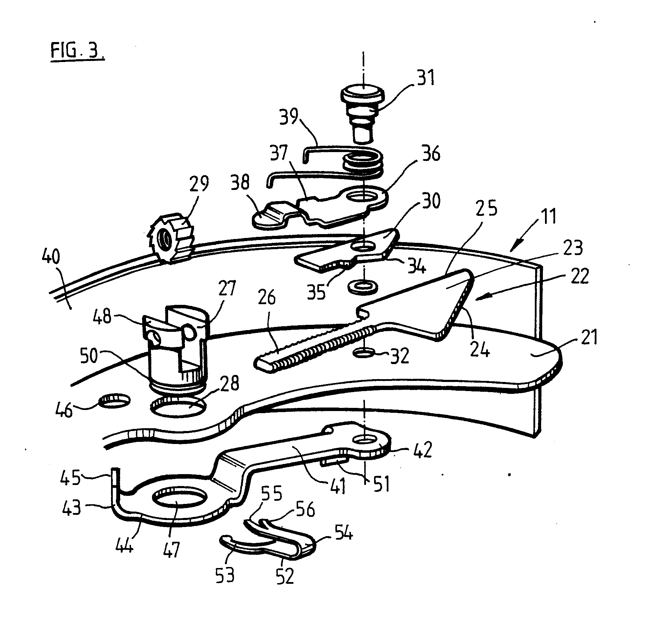

In the embodiment illustrated in figure 3 the pivot post 31 is in the form of a shouldered rivet. A support plate 41 is secured at one end 42 to the web portion 21 of shoe 11 on the opposite side thereof from the spacer element 22, by means of pivot post 31. The portion of support plate 41 at end 42 lies against the web portion 21, while at the other end 43, a portion 44 is cranked away from the web portion 21, so that it lies parallel to but is spaced away from web portion 21. The end 43 of support plate 41 is bent perpendicular to the portion 44 so that it abuts the web portion 21. A tab portion 45 is provided at the end 43 and locates in a hole 46 in the web portion 21, to position the support plate so that portion 44 underlies a circular aperture 28 in the web portion 21. A corresponding aperture 47 is provided in portion 44 of the support plate 41 through which the trunnion 27 extends, so that a shoulder 48 on the trunnion 27 abuts the upper edge of the web portion 21. A tab 51 is also provided at the end 42 of support plate 41 and abuts the table 40 of shoe 11 to further locate the support plate 41. A further tab (not shown) may also be provided adjacent end 42 of support plates 41 to provide an anchorage for pull-off spring 17. The support plate 41 will thus provide support for the trunnion 27 at a position spaced axially from the web portion 21 and will consequently significantly reduce any tendency for the trunnion 27 to rock during operation of the adjustment mechanism. This will improve the accuracy of the adjustment mechanism.

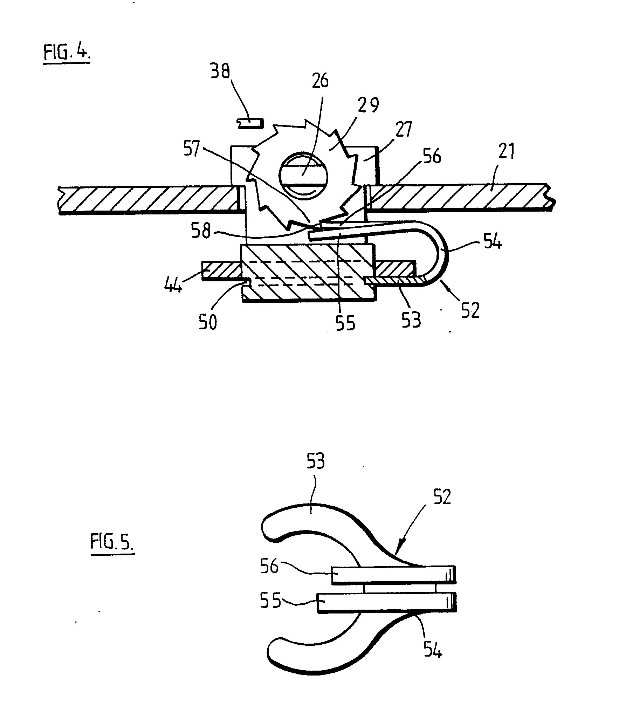

A retaining clip 52 has a circlip portion 53 which engages in a circumferential groove 50 in the trunnion 27 and abuts the under side of portion 44 of support plate 41, to retain the trunnion 27 in position. As illustrated in greater detail in Figures 4 and 5, the retaining clip 52 has a tab formation 54 which is bent around the edge of plate 41 and between the posts of trunnion 27. The tab formation 54 is divided into two resilient fingers 55 and 56, which extend into engagement with ratchet wheel 29. Finger 55 is longer than finger 56 by half the pitch of the teeth 57 of the ratchet wheel 29, so that at one position of the ratchet wheel 29, finger 56 will engage the radial face 58 of one tooth 57 and upon rotation of the ratchet wheel 29 by half a tooth pitch, finger 55 will engage the radial face 58 of the same tooth 57. A further turn of half a tooth pitch will then bring finger 56 into abutment with the radial face 58 of the next tooth 57, and so on.

The clip 52 will thus permit rotation of ratchet wheel 29 in the clockwise direction as shown in figure 4, to effect adjustment of the spacer element during application of the service brake. Upon release of the service brake, abutment of finger 55 or 56 against the radial face 58 of one of the teeth 57 of the ratchet wheel 29 will prevent rotation of the ratchet wheel 29 in the reverse direction, as the pawl 38 is retracted.

Various modifications may be made without departing from the invention. For example, in the embodiment illustrated in figure 2 the trunnion 27 may be located in a circular aperture in the web portion 21, being inserted through this aperture from the opposite side of the web portion. Alternatively, the trunnion may be rivetted to the web portion 21 or to a support plate 41, the rivet providing a pivot therefor. The plate 30 and actuating arm 36 may be made as an integral component. The torsion spring 39 may also be replaced by other forms of spring, and in fact the pull-off spring 17 may be used for this purpose in addition to urging the brake shoes 11 and 12 together. While it is advantageous to use a flat spacer element 22 so that loads will be transmitted directly into the web of the shoe, the screw threaded portion 26 may be offset from the wedge portion 23. A clip 52 similar to that used in the embodiment illustrated in figure 3 may also be used with the embodiment illustrated in figure 2, the tab portion 54 extending around the edge of web portion 21 so that the fingers 55, 56 will engage the ratchet wheel 29. Also while it is advantageous to divide the tab portion 54 into two resilient fingers of differing length, a clip with a single finger formation could be used.

## Claims

1. An automatic adjuster for an internal shoe drum brake including a hand brake lever (18) pivotted to one brake shoe (12) and rigid strut (19) extending between the brake lever (18) and the other brake shoe (11) comprising; a spacer element (22) having a wedge portion (23) with a pair of divergent edges (24, 25) and a screw threaded portion (26) extending parallel to the wedge portion (23), said screw threaded portion (26) engaging a correspondingly threaded portion on a ratchet wheel (29); characterised in that the ratchet wheel - (29) is located in a trunion (27) which is pivotally attached to said other brake shoe (11), the spacer element (22) thereby being mounted on said other brake shoe (11) in a position in which the wedge portion (23) is interposed between the end of the rigid strut (19) and an abutment (34) on said other brake shoe (11) and one of the divergent edges - (24) may bear against the end of the rigid strut - (19) while the other divergent edge (25) bears against the abutment (34); a pawl assembly - (30,36) mounted on said other brake shoe (11) for movement relative thereto, said pawl assembly - (30,36) comprising a formation (35) which engages the spacer element (22) and a resilient member - (38) for co-operation with the ratchet wheel (29), means (39) to maintain the divergent edge (24) of the spacer element (22) in engagement with the end of the rigid strut (19) and means (39) to maintain engagement between the pawl assembly - (30,36) and the spacer element (22), so that when there is relative movement between the rigid strut - (19) and said other brake shoe (11) the resilient member (38) will move relative to the ratchet wheel (29) and will rotate the ratchet wheel (29) to advance the spacer element (22) and increase the width of the wedge portion (23) thereof which is interposed between the end of the rigid strut (19) and the abutment (34) on said other brake shoe - (11), when the relative movement between the rigid strut (19) and said other brake shoe (11) exceeds a predetermined maximum limit.

2. An automatic adjuster according to claim 1 characterised in that the trunnion (27) is pivotally attached to the web portion (21) of the brake shoe - (11).

3. An automatic adjuster according to claim 2 characterised in that the trunnion (27) is pivotally mounted through an aperture (28) in the web portion (21) and a support plate (41) is secured to the web portion (21), the trunnion (27) passing through a corresponding aperture (47) in the support plate - (41), at a position spaced axially from the web portion (21) of the shoe (11).

4. An automatic adjuster according to claim 2 or 3 characterised in that retaining means (52) is adapted to engage the trunnion (27) at the end thereof remote from the ratchet wheel (29) to form an abutment against one side of the web portion - (21) or support plate (41), said retaining means - (52) having a resilient tab formation (54) which extends around the edge of the web portion (21) or support plate (41) and between the posts of the trunnion (27), to engage the ratchet wheel (29) and prevent rotation of the ratchet wheel (29) in the direction counter to that in which the ratchet wheel (29) is driven by the pawl mechanism (30,36) to effect adjustment of the spacer element (22).

5. An automatic adjuster according to claim 4 characterised in that the retaining means (52) has a circlip formation (53) which engages in a circumferential groove (50) in the trunnion (27).

6. An automatic adjuster according to claim 4 or 5 characterised in that the resilient tab formation (54) is divided into two resilient fingers (55 and 56), said fingers (55 and 56) being of different lengths so that they will engage the ratchet wheel (29) at spaced locations on the periphery thereof.

7. An automatic adjuster according to claim 6 characterised in that the lengths of the two resilient fingers (55 and 56) differ by half the pitch of the teeth (57) of the ratchet wheel (29).

8. An automatic adjuster according to any one of claims 2 to 7 characterised in that the wedge portion (23) and screw threaded portion (26) of the spacer element (22) are coplanar and the spacer element (22) fits flush against the web portion (21) of the brake shoe (11).

9. An automatic adjuster according to any one of Claims 1 to 8 characterised in that the pawl assembly (30,36) is formed from a plate (30) having a formation (35) which engages one of the divergent sides (25) of the wedge portion (23) of the spacer element (22) and a resilient actuating arm (36) having means (37) for engaging said plate and defining the member (38) which co-operates with the ratchet wheel (29), said plate (30) and actuating arm (36) being pivotted to the web portion (21) of the brake shoe (11).

10. An automatic adjuster according to Claim 9 characterised in that a torsion spring (39) acts between the actuating arm (36) and the table (40) of the brake shoe (11).

11. An automatic adjuster according to Claim 10 characterised in that the torsion spring (39) also acts to resiliently load the actuator arm (36).

12. An internal shoe drum brake assembly including a rigid strut (19) which engages at one end, a hand brake lever (18) pivotted to one brake shoe (12) and at the other end a spacer element (22) of an automatic adjuster characterised in that said automatic adjuster is formed in accordance with any one of Claim 1 to 11, said automatic adjuster being attached to said other brake shoe (11).

FIG.1.

FIG.2.

FIG. 3.

FIG. 4.

38
26
29
27
56
21
57
58
54
44
50
55
53
52

FIG. 5.

53
52
56
55
54

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 049 583  (AUTOMOTIVE PRODUCTS LTD)<br>* Whole document; figures 1-5 * | 1 | F 16 D  65/56 |
| A | GB-A-2 058 970  (AUTOMOTIVE PRODUCTS LTD)<br>* Page 2, line 100 - page 3, line 16; figures 4-7 * | 1 | |
| A | DE-A-1 480 292  (ALFRED TEVES GmbH) | | |
| A | DE-A-2 165 733  (AUTOMOTIVE PRODUCTS CO. LTD) | | |
| A | EP-A-0 048 565  (AUTOMOTIVE PRODUCTS LTD)<br>----- | | TECHNICAL FIELDS SEARCHED (Int. Cl.4)<br><br>F 16 D  65/00 |

The present search report has been drawn up for all claims

| Place of search | Date of completion of the search | Examiner |
|---|---|---|
| THE HAGUE | 23-03-1987 | BRAEMS C.G.I. |